# EUROPÄISCHE PATENTSCHRIFT

(11) **EP 2 599 037 B1**
(45) Veröffentlichungstag und Bekanntmachung des Hinweises auf die Patenterteilung: **01.11.2017**
(21) Anmeldenummer: 11755057.4
(22) Anmeldetag: 07.09.2011
(51) Int. Cl.: G06K 19/077

(54) **FLEXIBLE TRANSPONDERANORDNUNG**
FLEXIBLE TRANSPONDER ARRANGEMENT
ENSEMBLE TRANSPONDEUR FLEXIBLE

(30) Priorität: 21.07.2011 DE 102011108286; 13.09.2010 DE 102010045190
(43) Veröffentlichungstag der Anmeldung: 05.06.2013
(73) Patentinhaber: Siemens Aktiengesellschaft, 80333 München (DE)
(72) Erfinder: SCHMIDT, Christopher, 07318 Saalfeld (DE); NITSCHE, Klaus, 07548 Gera (DE); HASSAN, Ramin, 07545 Gera (DE)
(86) Internationale Anmeldenummer: PCT/EP2011/065476
(87) Internationale Veröffentlichungsnummer: WO 2012/034911

(56) Entgegenhaltungen:
- EP-A2- 1 970 951
- WO-A1-2007/131383
- DE-C1- 19 612 521

## Beschreibung

Die Erfindung betrifft eine flexible Transponderanordnung, bestehend aus mindestens einem Halbleiterchip und mindestens einer flächigen Antenne, aufgebracht auf einem folienartigen Trägermaterial, wobei zwischen dem mindestens einem Halbleiterchip und der Antenne mindestens eine Klebe-Bondverbindung ausgebildet ist, gemäß Oberbegriff des Patentanspruchs 1.

Flexible Transponderanordnungen, auch Smart-Label genannt, stellen Transponderbauformen dar, die aus einem Folienmaterial bestehen, wobei beispielsweise die Transponderspule durch Siebdruck oder Ätztechnik auf einer dünnen Folie erzeugt wird. Diese Folie wird in vielen Fällen mit einer Deckschicht laminiert und kann bei einem Klebeetikett mit einem Klebstoff beschichtet werden. Derartige Transponder werden als sogenannte Selbstklebeetiketten auf einer Endlosrolle geliefert und sind derart flexibel, um sie auf Gepackstücke, Pakete oder Waren aller Art aufzubringen.

Der begrenzende Faktor für den Einsatz derartiger Smart-Labels bei Temperaturen >100°C ist die ausgeführte Bondverbindungsstelle zwischen dem Halbleiterchip und der Antenne zur drahtlosen Datenübertragung. Dies ist auf den Einsatz von leitfähigen Klebstoffen zurückzuführen, die aus feinsegmentierten Metallpartikeln, vorzugsweise Silber, und einem polymeren Klebstoff bestehen. Bei höheren Temperaturen wird die Klebebondung instabil und es kann zu einem Ausfall der Funktion bzw. der Datenübertragung zwischen Transponder und Lesegerät kommen. Außerdem wird das Inlay, in der Regel bestehend aus Polyethylenterephtalat-Trägerfolie, Chip und Antenne, bei thermischen Belastungen über die erwähnten 100°C aufgrund der unterschiedlichen Wärmeausdehnungskoeffizienten insgesamt stark verformt, so dass ein funktionsgerechter Einsatz eingeschränkt oder nicht mehr möglich ist.

Es gibt also zusammenfassend für einen Einsatz bei Temperaturen > 100°C zwei wesentliche begrenzende Faktoren. Zum einen wird das Inlay, in der Regel bestehend aus Polyethylenterephthalat-Trägerfolie, Chip und Antenne, bei thermischen Beanspruchungen über 100°C hinaus aufgrund unterschiedlicher Wärmeausdehnungskoeffizienten so verformt und verändert, dass funktionsotwendige Datenübertragungen stark eingeschränkt werden oder gänzlich unmöglich sind.
Zum anderen ist die Bondverbindungsstelle zwischen Halbleiterchip und Antenne problematisch. Der Einsatz von leitfähigen Klebstoffen, die aus feinpigmentierten Metallpartikeln, vorzugsweise Silber, und einem polymeren Klebstoff bestehen, führt bei höheren Temperaturen zu Instabilitäten und zu einem Ausfall der notwendigen Funktion der Datenübertragung.

Aus der WO 2008/132287 A1, die als nächstliegender Stand der Technik gesehen wird, ist ein RFID-Transponder vorbekannt, der auf der Basis eines hitzeresistenten Substrats erstellt wurde, wobei das Substrat aus einem Kunststoff-Filmmaterial besteht, weiches gegenüber Temperaturen von bis zu 200°C beständig ist. Auf der Oberfläche dieses Substrats ist eine Antennenkonfiguration gebildet und es wird ein integrierter Schaltkreis elektrisch mit der Antennenkonfiguration verbunden. Weiterhin ist der integrierte Schaltkreis, ausgebildet als Chip, am Substrat fixiert, wobei hierfür ein anisotropes leitfähiges Harz, insbesondere ein Epoxydharz, zur Anwendung kommt, welches ebenfalls bis zu 200°C temperaturseitig belastet werden kann. Das Harzverbindungsmittel besitzt einen thermischen Ausdehnungskoeffizienten, der im Wesentlichen gleich dem Ausdehnungskoeffizienten des Silizium-Chipmaterials ist.

Die US 4,392,315 A offenbart ein Etikett, welches feuchtebeständig und schwer zerstörbar ausgebildet ist. Dieses Etikett dient u.a. zur Kennzeichnung von Textilien und umfasst mindestens eine Lage aus einem Aramid-Papier, welches mit produktspezifischen farbigen Kennzeichen bzw. einem entsprechenden Aufdruck versehen ist.

Zum Stand der Technik sei noch auf die EP 2 138 963 A1, EP 1 970 951 A2, und die DE 10 2004 039 505 A1 verwiesen, wobei letztere Offenlegungsschrift einen Verbundwerkstoff aus Polymeren und Fasermaterialien und daraus hergestellte Schichtsysteme zeigt. Die dort erläuterten faserverstärkten Kunststoffe weisen aufgrund einer entsprechenden Auswahl des Fasermaterials, insbesondere eines Gestrickes, thermische Ausdehnungskoeffizienten auf, die in x-Richtung, y-Richtung und z-Richtung einstellbar sind. Als Anwendungsgebiet wird diesbezüglich auf die Möglichkeit hingewiesen, elektrische oder optische Leiterbahnen direkt in das Gestrick einzuweben mit der Folge einer höheren Flexibilität der Leiterbahnen, wobei bei Biegung oder Dehnung einer entsprechend ausgebildeten Leiterplatte ein Leiterbahnbruch unwahrscheinlicher ist.

Aus dem Vorgenannten ist es daher Aufgabe der Erfindung, eine weiterentwickelte flexible Transponderanordnung, bestehend aus mindestens einem Halbleiterchip und mindestens einer flächigen Antenne, aufgebracht auf einem folienartigen Trägermaterial, anzugeben, welche gegenüber Temperaturen von 200°C bis 250°C über einen längeren Zeitraum beständig ist.

Die Lösung der Aufgabe der Erfindung erfolgt mit einer Transponderanordnung gemäß der Merkmalskombination nach Patentanspruch 1, wobei die Unteransprüche mindestens zweickmäßige Ausgestaltungen und Weiterbildungen umfassen.

Es wurde erkannt, dass die Hauptursache der bisher geringen Temperaturbeständigkeit in der Ausdehnung des leitfähigen Klebstoffs und damit der Kontaktverlust zwischen Antenne und Chip und/oder der bei erhöhten Temperaturen fehlenden Kontaktausbildung der leitfähigen Metallpartikel im Klebstoff zu sehen ist. Die erfindungsgemäße Lehre geht auf den Gedanken zurück, dieser negativen Ausdehnung mit Kontaktverlust oder schlechterer Leitfähigkeit durch den Aufbau der Transponderanordnung entgegenzuwirken.

Demnach wird zur thermischen Stabilisierung die Transponderanordnung mit einem flächigen Material beschichtet oder in ein solches flächiges Material eingebettet, wobei das flächige Material einen Ausdehnungskoeffizienten aufweist, welcher demjenigen der Antenne, der Trägerfolie und/oder der Klebe-Bondverbindung entgegenwirkt.

Bei einer Ausführungsform weist das flächige Material Aramid-Fasern auf.

Bei einer Alternative besteht die Möglichkeit, das flächige Material mit in Kunstharz eingebetteten Kohlestofffasern zu versehen.

Bei einer bevorzugten Ausführungsform ist das flächige Material ein synthetisches Papier.

Dieses synthetische Papier enthält stabilisierende Bestandteile aus Polyphenylenterephtalamid, Polyphenylenisophtalamid oder stoffverwandten Materialien.

Die erfindungsgemäße flexible Transponderanordnung kann als nicht klebendes oder klebendes Etikett ausgeführt werden und z.B. von der Rolle entlang vorgesehener Stanzungen dann jeweils vereinzelt einer Anwendung zugeführt sein. Das heißt, das Produkt kann vereinzelt oder endlos mit oder ohne Perforation gefertigt werden. Je nach Anwendung ist auch eine thermostabile Bedruckung oder Laserbeschriftung möglich.

Bei einem Ausführungsbeispiel der Erfindung wird von einem an sich bekannten Inlay-Transponder ausgegangen, welcher aus einer Polyethylenterephtalat-Trägerfolie besteht, auf der der Halbleiterchip und die zugehörige Antenne befindlich und elektrisch kontaktiert sind.

Dieser Inlayaufbau wird gemäß Ausführungsbeispielen derart modifiziert, dass das Inlaymaterial, vorzugsweise in Folien- oder Papiermaterial, eingebettet ist, wobei das Folien- oder Papiermaterial einen negativen Ausdehnungskoeffizienten aufweist. In einer solchen Konfiguration wird die negative Wirkung der Ausdehnung des leitfähigen Klebstoffs, der die Kontaktierung zwischen Chip und Antenne bewirkt, kompensiert. Gleichzeitig wird das Inlay bei thermischen Beanspruchungen über 100°C hinaus aufgrund des Einsatzes von Materialien mit negativen Ausdehnungskoeffizienten in Kombination mit thermostabilen Klebstoffen so stabilisiert, dass die gewünschten Funktionen auch bei Temperaturen im Bereich von 200°C bis 250°C wenigstens über einen Zeitraum von fünf Stunden erhalten bleiben. Eine Veränderung der Form bei einer Temperaturbelastung ist im Vergleich zum Stand der Technik nicht gegeben.

Das zur Stabilisierung der Transponderanordnung benutzte flächige Material besteht gemäß Ausführungsbeispiel aus Aramid-Fasern umfassendes Folienmaterial oder einem dementsprechenden synthetischen Papier. Vorzugsweise kommen Poly(p)phenylenterephtalamid, Poly(m)phenylenisophtalamid oder stoffverwandte Materialien zur Stabilisierung zum Einsatz. Dabei entsteht ein Smart-Label mit durch Poly(p)phenylenterephtalamid extrem maßhaltigen thermostabilen Eigenschaften, wobei der ansonsten thermisch labile Aufbau des Inlay-Transponders stabilisiert wird.

Die Erfindung soll nachstehend anhand eines Ausführungsbeispiels sowie unter Zuhilfenahme von Figuren näher erläutert werden.

Hierbei zeigen:
- Fig. 1a: eine Prinzipschnittdarstellung einer erfindungsgemäßen Transponderanordnung als selbstklebende Variante auf Silikonträgern;
- Fig. 1b: eine selbstklebende Variante ähnlich gemäß Fig. 1a, jedoch ohne separate Acrylatkleberlage;
- Fig. 1c: eine Ausführungsform des Labels, wobei das Inlay von zwei aramidverstärkten Papierschichten umgeben ist;
- Fig. 1d: eine Ausführungsform mit selbstklebender aramidverstärkter Schicht und
- Fig. 2a: und 2b eine Darstellung einer weiteren Möglichkeit zur Erzeugung selbstklebender Transponderanordnungen, wobei von einem Produkt gemäß Fig. 2a beispielhaft ausgegangen wird, um über einen weiteren Produktionsschritt ein Produkt gemäß Fig. 2b zu erhalten, welches unterseitig eine nichtklebende zweite aramidverstärkte Schicht aufweist, wobei die oberseitige aramidverstärkte Schicht nur im Wesentlichen im Bereich über dem Inlay ausgebildet ist.

Gemäß den Ausführungsbeispielen der Erfindung wird bei dem flächigen Material mit spezifiziertem Ausdehnungskoeffizienten auf ein aramidfaserverstärktes Material zurückgegriffen. Insbesondere kommt hier ein Aramid-Produkt zum Einsatz, welches unter dem Markennamen "NOMEX" (eingetragene Marke DuPont) vertrieben wird. Derartige meta-Aramid-Produkte sind weitgehend unempfindlich gegenüber Chemikalien und Hitze und schmelzen nicht. Entsprechende Aramid-Papiere können ein- oder beidseitig mit Klebern, insbesondere Arcylatklebern, beschichtet werden, wobei sich diesbezüglich Vorteile bei der Laminierung zur Herstellung der Transponderanordnung ergeben.

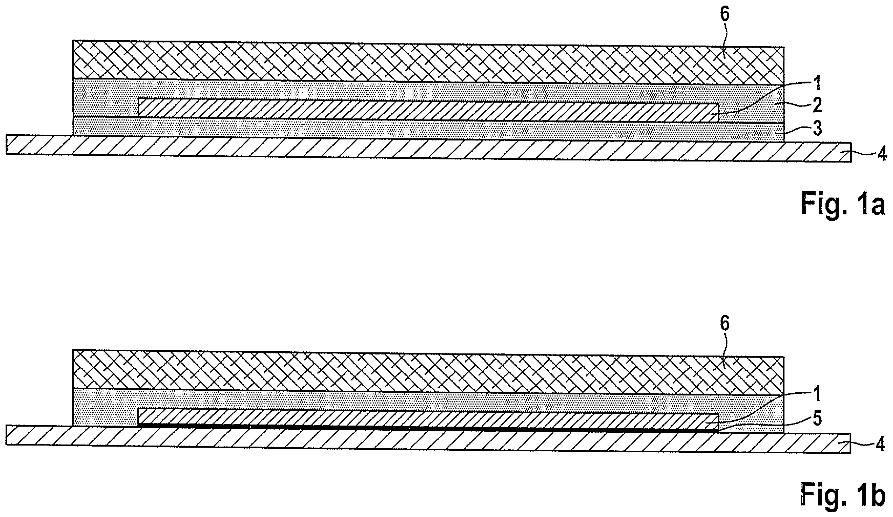

Bei einer ersten Ausführungsform der erfindungsgemäßen Transponderanordnung gemäß Fig. 1a wird von einem Inlay 1 ausgegangen, welches beidseitig in eine Acrylatkleberschicht 2; 3 eingebettet ist. Das Inlay besitzt in diesem Fall keinerlei direkten Kontakt zu weiteren Oberflächen, wodurch das Verhalten unter Temperatureinwirkung kalkulierbar wird. Basis dieser Anordnung bildet ein Silikonträgermaterial 4.

Bei der Ausführungsform gemäß Fig. 1b weist das Inlay 1 eine selbstklebende Beschichtung 5 auf. Eine separate Acrylatkleberlage, wie in der Fig. 1a dargestellt, kann entfallen.

Bei den Lösungen nach den Fig. 1a und 1b ist oberseitig ein flächiges Material aus Aramid-Fasern 6 vorhanden, welches die Gesamtanordnung entsprechend thermisch stabilisiert.

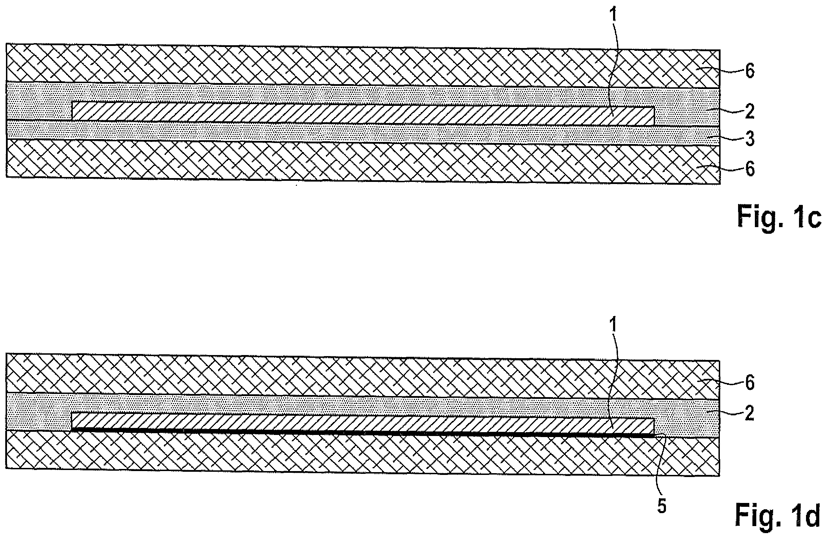

Bei den Ausführungsformen gemäß den Fig. 1c und 1d ist das eigentliche Inlay 1 von zwei flächigen Schichten aus aramidfaserverstärktem Material 6 umgeben.

Gemäß Fig. 1c sind ähnlich gemäß dem Ausführungsbeispiel nach Fig. 1a zwei Acrylatklebeschichten 2 und 3 vorhanden. Beide Flächenmaterialschichten 6 nach Fig. 1c sind selbstklebend, wobei bei der Ausführungsform gemäß Fig. 1d nur eine Seite des Flächenmaterials 6 selbstklebend ausgestaltet ist und das selbstklebende Inlay 1; 5 auf die unbeschichtete Seite des Flächenmaterials 6 aufgebracht wird. Die selbstklebende Flächenmaterialschicht 6 ist das überlaminiert. Die vorstehenden Ausführungsbeispiele ermöglichen die Schaffung hitzebeständiger Transponderanordnungen, insbesondere für Lackieranwendungen von Fahrzeugen oder dergleichen Objekten. Durch Einsatz eines flächigen Materials enthaltend oder auf der Basis von Aramid-Fasern und die Möglichkeit, dieses mit silikonfreien Acrylatklebern zu verarbeiten, ergibt sich auch bei hohen Temperaturen die gewünschte Formstabilität.

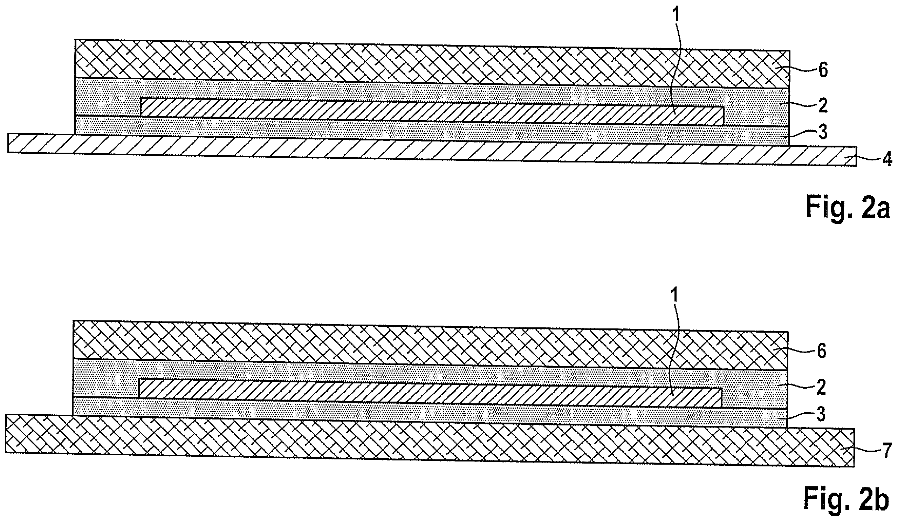

Gemäß der Darstellung nach Fig. 2a wird von einer Lösung ausgegangen, bei der analog der Erläuterung zu Fig. 1a ein Inlay 1 vorhanden ist, welches beidseitig in eine Acrylatkleberschicht 2; 3 eingebettet wird. Das Inlay 1 besitzt keinen direkten Kontakt zu weiteren Oberflächen, wodurch sich ein gut kalkulierbares Verhalten unter Temperatureinwirkung ergibt. Basis der Anordnung bildet auch hier ein Silikonträgermateriai 4.

Dieses Silikonträgermaterial 4 wird mittels Saugwalze abgezogen, wobei in einem anschließenden Schritt die Labelanordnung auf eine unbeschichtete aramidverstärkte Schicht 7 gespendet wird. Im Ergebnis wird eine Anordnung erhalten, die im Inlaybereich 1 mit einer ersten Verstärkungsschicht 6 und rückseitig mit einer zweiten Verstärkungsschicht 7 versehen ist, wobei letztere durchgehend ausgeführt wird. Durch die obere Verstärkungsschicht 6, die nur im Wesentlichen oberhalb des Inlays 1 befindlich ist, kann eine Materialeinsparung erfolgen.

Die Transponderanordnungen können mit einem oder mehreren Löchern für eine hängende Anbringung, als Karte, vereinzelt, banderolisiert und/oder abgepackt sowie perforiert auf Rolle oder selbstklebend auf Rolle geliefert werden. Darüber hinaus ist eine Bedruckung und/oder Programmierung je nach Kundenwunsch ohne weiteres möglich.

Zusammenfassend kann erfindungsgemäß ein konventionelles Inlay, welches funktionswesentliche Elemente der Transponderanordnung wie Chip und Antenne umfasst, so unter Berücksichtigung des flächigen Materials aus oder enthaltend Aramid-Fasern eingebettet werden, dass die gewünschte Beständigkeit bis zu Temperaturen von über 200°C über mehrere Stunden erreicht wird. Dabei besteht sowohl die Möglichkeit, das Inlay für sich in einen Kleber einzubetten, so dass dieses keinen direkten Kontakt mit Oberflächen eines Silikonträgers bzw. des flächigen Materials und Aramid-Fasern hat. Ebenso kann aber das Einbetten in den insbesondere Acrylat- oder Kautschukkleber einseitig vorgenommen werden, wobei bei dieser Variante selbstklebende Inlays zur Anwendung kommen.

## Patentansprüche

1. Flexible Transponderanordnung
mit mindestens einem Halbleiterchip und mindestens einer flächigen Antenne, aufgebracht auf einem folienartigen Trägermaterial, wobei in einem Inlaybereich (1) zwischen Halbleiterchip und Antenne mindestens eine Klebe-Bondverbindung ausgebildet ist,
wobei zur thermischen Stabilisierung die Transponderanordnung mit einem flächigen Material (2, 3) beschichtet, in ein solches Material eingebettet oder von einem solchen Material umgeben ist,
wobei das flächige Material (2, 3) einen Ausdehnungskoeffizienten aufweist, welcher demjenigen der Klebe-Bondverbindung und damit der Gesamtverformung entgegenwirkt,
**dadurch gekennzeichnet, dass**
die Transponderanordnung im Inlaybereich (1) mit einer ersten Verstärkungsschicht (2) und mit einer zweiten Verstärkungsschicht (7) versehen ist, wobei die zweite Verstärkungsschicht (7) durchgehend ausgeführt ist, während die erste Verstärkungsschicht (6) sich nur über den Inlaybereich (1) erstreckt.

2. Flexible Transponderanordnung nach Anspruch 1,
**dadurch gekennzeichnet, dass** das flächige Material Aramid-Fasern aufweist.

3. Flexible Transponderanordnung nach Anspruch 1,
**dadurch gekennzeichnet, dass** das flächige Material in Kunstharz eingebettete Kohlestofffasern aufweist.

4. Flexible Transponderanordnung nach einem der vorangegangenen Ansprüche,
**dadurch gekennzeichnet dass** das flächige Material ein synthetisches Papier ist.

5. Flexible Transponderanordnung nach Anspruch 4,
**dadurch gekennzeichnet, dass** das Papier stabilisierende Bestandteile aus Polyphenylenterephtalamid, Polyphenylenisophtalamid oder stoffverwandte Materialien enthält.

6. Flexible Transponderanordnung nach einem der vorangegangenen Ansprüche,
**dadurch gekennzeichnet, dass** diese als nicht klebendes oder klebendes Etikett ausgeführt ist.

7. Flexible Transponderanordnung nach einem der vorangegangenen Ansprüche,
**dadurch gekennzeichnet, dass** das flächige Material eine Kleberbeschichtung aufweist.

8. Flexible Transponderanordnung nach einem der vorangegangenen Ansprüche,
**dadurch gekennzeichnet, dass** die Transponderanordnung in eine hitzebeständige Kleberschicht eingebettet oder von dieser umgeben ist.

9. Flexible Transponderanordnung nach Anspruch 8,
**dadurch gekennzeichnet, dass** ober- und/oder unterhalb der Kleberschicht das flächige Material befindlich ist.

## Claims

1. Flexible transponder arrangement,
with at least one semiconductor chip and at least one planar antenna, applied to a film-like substrate material, wherein at least one adhesive bond is formed in an inlay region (1) between the semiconductor chip and the antenna, wherein, for thermal stabilization, the transponder arrangement is coated with a planar material (2, 3), is embedded in such a material or is surrounded by such a material,
wherein the planar material (2, 3) has an expansion coefficient that counteracts that of the adhesive bond, and consequently the overall deformation,
**characterized in that**
the transponder arrangement is provided in the inlay region (1) with a first reinforcing layer (2) and with a second reinforcing layer (7), wherein the second reinforcing layer (7) is provided throughout, while the first reinforcing layer (6) only extends over the inlay region (1).

2. Flexible transponder arrangement according to Claim 1,
**characterized in that** the planar material comprises aramid fibres.

3. Flexible transponder arrangement according to Claim 1,
**characterized in that** the planar material comprises carbon fibres embedded in synthetic resin.

4. Flexible transponder arrangement according to one of the preceding claims,
**characterized in that** the planar material is a synthetic paper.

5. Flexible transponder arrangement according to Claim 4,
**characterized in that** the paper contains stabilizing constituents of polyphenylene terephthalamide, polyphenylene isophthalamide or materials of related substances.

6. Flexible transponder arrangement according to one of the preceding claims,
**characterized in that** it is designed as a non-adhesive or adhesive label.

7. Flexible transponder arrangement according to one of the preceding claims,
**characterized in that** the planar material has an adhesive coating.

8. Flexible transponder arrangement according to one of the preceding claims,
**characterized in that** the transponder arrangement is embedded in a heat-resistant adhesive layer or is surrounded by the latter.

9. Flexible transponder arrangement according to Claim 8,
**characterized in that** the planar material is located above and/or below the adhesive layer.

## Revendications

1. Agencement souple de transpondeur
comprenant au moins une puce à semi-conducteur et au moins une antenne en deux dimensions, déposée sur un matériau support de type en feuille, au moins une liaison par collage étant constituée dans une région (1) d'inlay entre la puce à semi-conducteur et l'antenne,
dans lequel, pour la stabilisation thermique, l'agencement de transpondeur est revêtu d'une matière (2, 3) en deux dimensions, est incorporé dans une matière de ce genre ou est entouré d'une matière de ce genre,
dans lequel la matière (2, 3) en deux dimensions a un coefficient de dilatation, qui s'oppose à celui de la liaison par collage et ainsi s'oppose à la déformation globale, **caractérisé en ce que**
l'agencement de transpondeur est pourvu, dans la région (1) d'inlay, d'une première couche (2) de renfort et d'une deuxième couche (7) de renfort, la deuxième couche (7) de renfort étant réalisée de manière continue, tandis que la première couche (6) de renfort ne s'étend que sur la région (1) d'inlay.

2. Agencement souple de transpondeur suivant la revendication 1,
**caractérisé en ce que** la matière en deux dimensions comporte des fibres d'aramide.

3. Agencement souple de transpondeur suivant la revendication 1,
**caractérisé en ce que** la matière en deux dimensions comporte des fibres de carbone à incorporer dans une résine synthétique.

4. Agencement souple de transpondeur suivant l'une des revendications précédentes,
**caractérisé en ce que** la matière en deux dimensions est un papier synthétique.

5. Agencement souple de transpondeur suivant la revendication 4,
**caractérisé en ce que** le papier contient des constituants stabilisants en téréphtalamide de polyphénylène, en isophtalamide de polyphénylène ou en matières apparentées.

6. Agencement souple de transpondeur suivant l'une des revendications précédentes,
**caractérisé en ce qu'**il est réalisé sous la forme d'une étiquette non-collante ou collante.

7. Agencement souple de transpondeur suivant l'une des revendications précédentes,
**caractérisé en ce que** la matière en deux dimensions a un revêtement de colle.

8. Agencement souple de transpondeur suivant l'une des revendications précédentes,
**caractérisé en ce que** l'agencement de transpondeur est incorporé dans une couche de colle résistante à la chaleur ou en est entouré.

9. Agencement souple de transpondeur suivant la revendication 8,
**caractérisé en ce que** la matière en deux dimensions se trouve au-dessus et/ou en dessous de la couche de colle.
